# FASCICULE DE BREVET EUROPEEN

(11) **EP 3 994 596 B1**
(45) Date de publication et mention de la délivrance du brevet: **06.05.2026**
(21) Numéro de dépôt: 20734765.9
(22) Date de dépôt: 01.07.2020
(51) Int. Cl.: G06F 21/53, G06F 21/62, G06F 21/74

(54) **ARCHITECTURE INFORMATIQUE EN NUAGE SECURISEE ET PROCEDE DE SECURISATION**
SICHERE CLOUD-RECHENARCHITEKTUR UND SICHERHEITSVERFAHREN
SECURE CLOUD COMPUTING ARCHITECTURE AND SECURITY METHOD

(30) Priorité: 01.07.2019 FR 1907284; 08.07.2019 FR 1907614
(43) Date de publication de la demande: 11.05.2022
(73) Titulaire: Prove&Run, 75017 Paris (FR)
(72) Inventeur: BOLIGNANO, Dominique, 75016 Paris (FR)
(74) Mandataire: Macquet, Christophe
(86) Numéro de dépôt international: PCT/EP2020/068484
(87) Numéro de publication internationale: WO 2021/001411

(56) Documents cités:
- EP-A1- 2 372 974
- US-A1- 2007 271 618
- US-A1- 2014 137 179

## Description

### DOMAINE DE L'INVENTION

La présente invention concerne une architecture informatique en nuage sécurisée comprenant un premier espace de gestion de données et/ou d'exécution de programmes informatiques dans lequel la gestion des données ou l'exécution des programmes est contrôlée par un utilisateur et un deuxième espace de gestion de données et/ou d'exécution de programmes informatiques dans lequel la gestion des données ou l'exécution des programmes est contrôlée par un opérateur tiers. Elle concerne en outre un procédé de sécurisation des données et/ou de l'exécution des programmes dans une telle architecture informatique en nuage.

### ART ANTERIEUR

Les particuliers, entreprises et les organisations gouvernementales ont de plus en plus recours à l'informatique en nuage (« cloud computing » en langue anglaise), et ce phénomène est amené à se développer dans les prochaines années. Toutefois, le problème de la sécurité et de la confiance se pose avec de plus en plus de force. Les gouvernements notamment se soucient de leur souveraineté. Par exemple, l'Etat français a aidé deux acteurs français, Orange^{™} Business Service et OVH^{™}, à faire concurrence aux géants américains tels que Amazon^{™} AWS et Microsoft^{™} Azure dans le domaine de l'informatique en nuage. Les entreprises par ailleurs, hésitent à confier les données et traitements critiques. En effet, les solutions actuelles n'offrent pas les garanties nécessaires, y compris lorsque ces solutions sont considérées comme « souveraines » c'est-à-dire comme dépendantes des états dans lesquels sont domiciliés lesdites entreprises (Orange ^{™} Business Service ou OVH^{™} en France). Il ne suffit pas en effet d'avoir un fournisseur de services informatiques en nuage national pour résoudre le problème de confiance, car eux-mêmes doivent utiliser du matériel et de logiciels étrangers et surtout peuvent commettre des erreurs ou être attaqués.

US 2014/137179 A1 et US 2007/271618 A1 constituent l'état de la technique pertinent.

### RESUME DE L' INVENTION

La portée de l'invention est définie par les revendications indépendantes.

Compte tenu de ce qui précède, un problème que ce propose de résoudre l'invention est proposer un procédé de sécurisation d'une architecture informatique en nuage. Plus particulièrement, le problème traité par l'invention est un problème de confiance : comment réaliser une architecture informatique en nuage dans laquelle un utilisateur notamment peut avoir pleinement confiance ou, au moins, autant confiance que si l'architecture était complètement sous son contrôle ?.

La solution proposée dans le cadre de de l'invention a pour premier objet une architecture informatique en nuage sécurisée comprenant :
un premier espace de gestion de données et/ou d'exécution de programmes informatiques dans lequel la gestion des données et/ou l'exécution des programmes est contrôlée par un utilisateur ;
un deuxième espace de gestion des données et/ou d'exécution de programmes informatiques dans lequel la gestion des données et/ou l'exécution des programmes est contrôlée par un opérateur tiers ;
caractérisée en ce qu'elle comprend en outre :
   des premières politiques de sécurités appliquées aux données ou à l'exécution des programmes dans le premier espace d'exécution ;
   des deuxièmes politiques de sécurité appliquées aux données ou à l'exécution des programmes dans le deuxième espace d'exécution ;
   une propriété de sécurité attendue par l'utilisateur, le respect desdites premières et deuxièmes politiques de sécurité garantissant une gestion des données et/ou une exécution de programmes informatiques conforme à cette propriété ; et
   une base de confiance garantissant, en l'absence de violation, l'application des deuxièmes politiques de sécurité dans la gestion des données et/ou l'exécution des programmes dans le deuxième espace d'exécution, ladite base de confiance comprenant, d'une part, une partie matérielle disposant de témoins indicateurs d'accès non autorisés et, d'autre part, une partie logicielle, ladite partie logicielle étant rendue disponible au utilisateur et/ou à un tiers de confiance. Ces témoins indicateurs sont visibles par l'utilisateur et pourront éventuellement provoquer la mise en sécurité du système.

Ainsi, lorsque le utilisateur exécute un programme au moins en partie dans le second espace d'exécution, et que les témoins indicateurs d'accès restent vierges, alors cet utilisateur peut être certain que l'exécution de ce programme satisfait à la propriété.

De manière avantageuse : - la base de confiance comprend un module matériel de sécurité, ledit module matériel de sécurité permettant à l'utilisateur de choisir un certificateur pour le représenter(au moins parmi une liste de possibilités), et la partie logicielle de la base de confiance est rendue disponible à l'utilisateur ou à son représentant ; - la partie logicielle de la base de confiance et la manière de la reconstruire est fournie ou rendue disponible à l'utilisateur et/ou à aux tiers de confiance ; - la base de confiance est partie d'un module matériel de sécurité dont le cœur logiciel, à savoir sa partie la plus complexe, est formellement prouvé ; - sont fournis à l'utilisateur les moyens qui lui permettent d'être convaincu que tous les chemins d'exécution de la partie logicielle de la base de confiance garantissent le respect des deuxièmes politiques de sécurité, dans des conditions de fonctionnement normales ; - l'architecture comprend un sous-ensemble qui comporte un ou plusieurs serveurs physiques formant l'espace (B), une partie matérielle et/ou de la base logicielle de la base de confiance formant modules matériels de sécurité étant associée auxdits serveurs ; - comporte en outre une partie matérielle de la base de confiance formant un boîtier additionnel, ce boîtier additionnel étant disposé à l'entrée du sous-ensemble et disposant de moyens pour filtrer des paquets de données entrant dans le sous-ensemble, ce filtrage comportant une vérification que lesdits paquets de données satisfont à une politique de sécurité, i.e. celle de l'environnement d'exécution (B).

L'invention a pour second objet un procédé de sécurisation d'une architecture informatique en nuage comprenant les étapes selon lesquelles :
on fournit un premier espace de gestion de données et/ou d'exécution de programmes informatiques dans lequel la gestion des données et/ou l'exécution des programmes est contrôlée par un utilisateur ;
on fournit un deuxième espace d'exécution de programmes informatiques dans lequel la gestion des données et/ou l'exécution des programmes est contrôlée par un opérateur tiers ;
des premières politiques de sécurités sont appliquées aux données et/ou à l'exécution des programmes dans le premier espace d'exécution ;
des deuxièmes politiques de sécurité sont appliquées aux données et/ou à l'exécution des programmes dans le deuxième espace d'exécution ;
on définit une propriété de sécurité attendue par le utilisateur, le respect desdites premières et deuxièmes politiques de sécurité garantissant une gestion et données et/ou une exécution de programmes informatiques conforme à cette propriété ;
on fournit une base de confiance garantissant, en l'absence de violation, l'application des deuxièmes politiques de sécurité dans la gestion des données et/ou l'exécution des programmes dans le deuxième espace d'exécution, ladite base de confiance comprenant, d'une part, une partie matérielle disposant de témoins indicateurs d'accès non autorisés et, d'autre part, une partie logicielle, ladite partie logicielle étant rendue disponible au utilisateur et/ou à un tiers de confiance ; et en ce que
la gestion des données et/ou l'exécution des programmes effectuée par l'utilisateur au moins en partie dans le deuxième espace d'exécution est considérée comme satisfaisante à la propriété attendue par l'utilisateur, si les témoins indicateurs d'accès restent vierges.

De manière avantageuse : - la partie logicielle de la base de confiance et la manière de la reconstruire est fournie ou rendue disponible dans son intégralité à l'utilisateur et/ou à au tiers de confiance.

### BREVE DESCRIPTION DES FIGURES

L'invention sera mieux comprise à la lecture de la description non limitative qui suit, rédigée au regard des dessins annexés, dans lesquels :

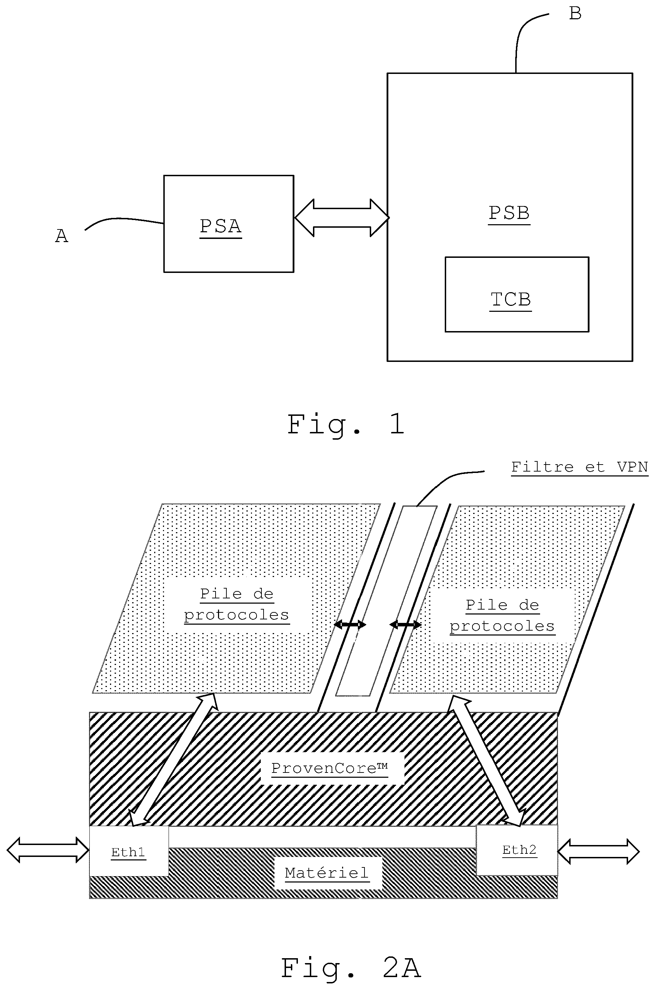

[Fig. 1] la figure 1 est un schéma illustrant une architecture selon l'invention ;
[Fig. 2A] la figure 2A est une représentation schématique d'un premier exemple de boîtier matériel comportant un cœur prouvé formellement du type ProvenCore^{™}, susceptible d'être mis en œuvre dans une architecture selon l'invention, ledit boîtier étant muni de moyens de filtrage et étant susceptible de former un VPN ;

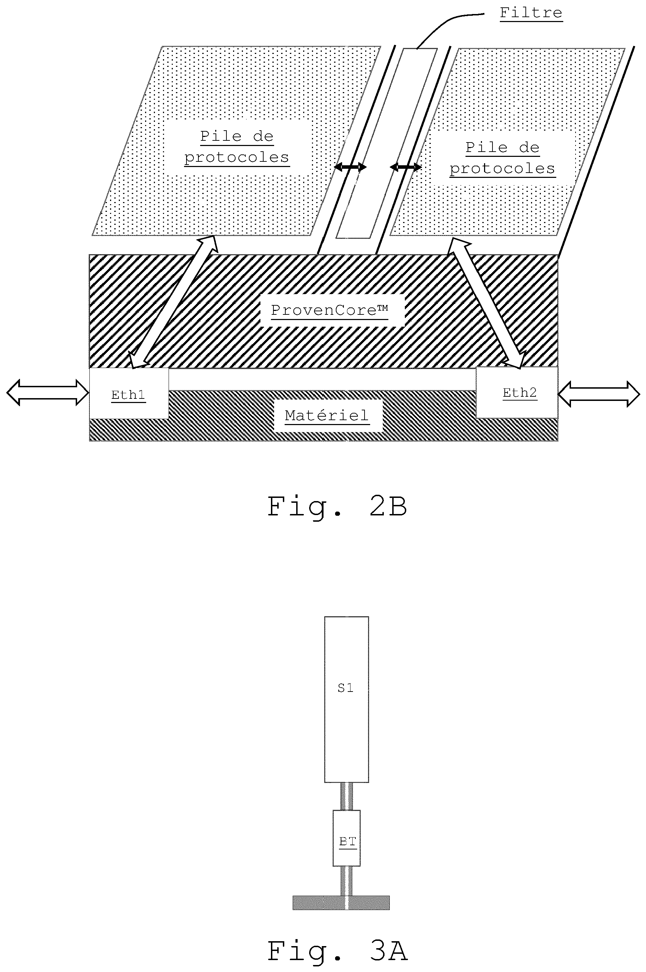

[Fig. 2B] la figure 2B est une représentation schématique d'un second exemple de boîtier matériel comportant un cœur prouvé formellement du type ProvenCore^{™}, susceptible d'être mis en œuvre dans une architecture selon l'invention, ledit boîtier étant muni de filtrage ;
[Fig. 3A] la figure 3A est une représentation schématique de salle spécifique selon l'invention, comportant une un serveur, et un module matériel de sécurité du type des modules matériels de sécurité montrés aux figures 2A ou 2B, participant à la base de confiance et permettant de réaliser différents cloisonnements, internes et avec l'extérieur ;

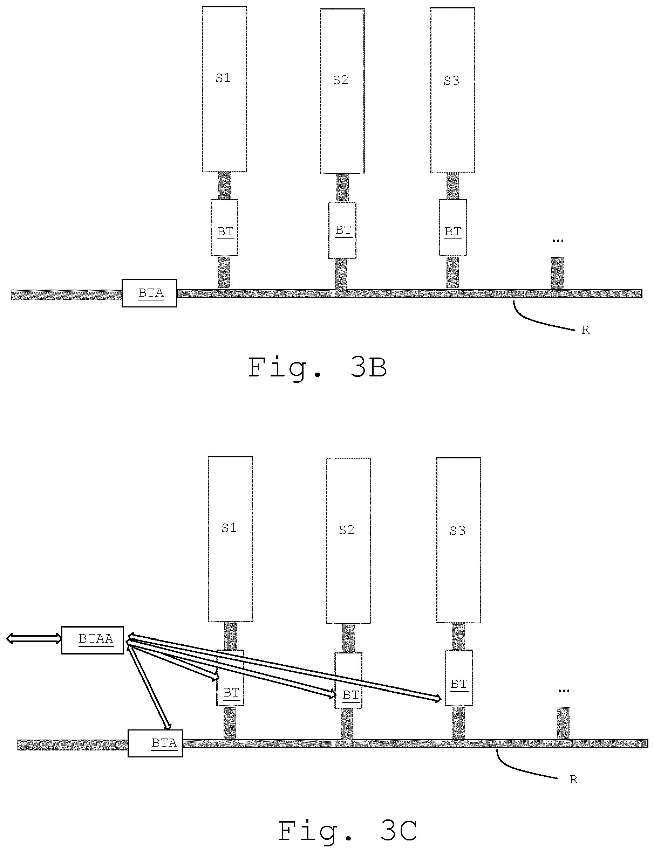

[Fig. 3B] la figure 3B est une représentation schématique de salle spécifique selon l'invention, comportant une pluralité de serveurs, et un ensemble de boîtiers du type des boîtiers montrés aux figures 2A ou 2B, participant à la base de confiance et permettant de réaliser différents cloisonnements, internes et avec l'extérieur ; et
[Fig. 3C] la figure 3C est une représentation schématique de salle spécifique selon l'invention, comportant une pluralité de serveurs, et un ensemble de boîtiers du type des boîtiers montrés aux figures 2A ou 2B, participant à la base de confiance et permettant de réaliser différents cloisonnements, internes et avec l'extérieur.

### DESCRIPTION DETAILLEE DE L'INVENTION

L'invention concerne une architecture informatique en nuage. Un telle architecture comprend généralement un ensemble de serveurs virtuels, chaque serveur virtuel étant associé à un ou plusieurs disques mémoire virtuels, chaque disque mémoire virtuel étant matérialisé par un ou plusieurs disques mémoire physiques lesdits disques mémoire physiques étant contenus dans des serveurs informatiques physiques. Un utilisateur accède aux services fournis par l'architecture informatique en nuage par exemple au moyen d'un ordinateur personnel, ou d'un serveur qu'il contrôle, ou d'un téléphone via un réseau du type Internet ou du type 3G, 4G ou 5G.

Ainsi que cela est montré à la figure 1, l'architecture selon l'invention comprend un premier espace ou environnement A de gestion des données et/ou d'exécution de programmes informatiques. Dans ce premier espace, les données, ainsi que la manière dont elles sont gérées, et l'exécution des programmes est contrôlée par un utilisateur ou client ou intéressé, ledit utilisateur étant par exemple une personne physique, une entreprise, une organisation gouvernementale, un opérateur, ou un ensemble formé par de telles entités, par exemple un utilisateur personne physique et son entreprise, ayant accès au moins à certains services fournis par l'architecture informatique en nuage. Le premier espace A est par exemple la station de travail de l'utilisateur : un serveur physique, un téléphone mobile multifonctions (« smartphone » en langue anglaise), un ordinateur personnel.

L'architecture comprend en outre un deuxième espace ou environnement B de gestion des données et/ou d'exécution de programmes informatiques. Cet espace B est par exemple une salle comprenant un ensemble de serveurs physiques munis de disques physiques typiquement disposés chez l'opérateur ou le fournisseur de services en nuage, donc distants. Dans ce deuxième espace, les gestion des données et/ou l'exécution des programmes est par un opérateur. Le contrôle de l'opérateur sur les données et/ou sur l'exécution des programmes est total ou partiel. Cet opérateur est par exemple un fournisseur de services informatiques en nuage ou un fournisseurs d'infrastructures informatiques. Cet opérateur n'est pas contrôlé par le utilisateur. En pratique et en général, l'utilisateur achète les services qu'il souhaite au sein de l'architecture à l'opérateur.

Dans le cas de la présente invention le utilisateur n'a pas confiance ou n'a pas une entière confiance dans l'opérateur tiers car il ne maitrise pas complètement la gestion de ses données et/ou des programmes qu'il exécute dans l'espace B.

Dans l'architecture selon l'invention, des premières politiques de sécurités PSA sont appliquées à la gestion des données et/ou à l'exécution des programmes dans le premier espace d'exécution A.

Les politiques de sécurité doivent être entendues comme étant des comportement attendus dans les espaces de gestion des données et/ou d'exécution des programmes. Ce sont des ensembles de règles de sécurité qui définissent par exemple, pour les données et/ou les programmes contenus dans l'architecture, la confidentialité, l'intégrité et, avantageusement, la disponibilité. Ces règles peuvent aussi définir les comportements admissibles. Par exemple un fichier de l'utilisateur géré par l'opérateur sera toujours stocké de manière chiffrée avec une clé faisant partie de la base de confiance et qui ne sortira jamais d'un HSM ((« Hardware Security Module » en langue anglaise, Module Matériel de Sécurité en français) formant un boitier. Ce fichier peut potentiellement être déchiffré par le HSM ou le module matériel de sécurité dans un espace isolé, c'est-à-dire un domaine de sécurité, typiquement créé dynamiquement par les modules matériel de sécurité de la figure 3A ou 3B, pour être ensuite traité pour le compte de l'utilisateur, puis le résultat sera rechiffré par le HSM ou module matériel de sécurité, pour être stocké en dehors de la base de confiance (c'est-à-dire la TCB) par l'opérateur, puis l'espace - le domaine de sécurité - sera effacé et l'espace libéré ou, autrement dit, les machines utilisées pourront être affectées par l'opérateur à d'autre tâches. Une politique de sécurité peut éventuellement aussi être définie dans le langage XML XCCDF (eXtensible Configuration Checklist Description Format - Format de description de liste à configuration extensible), qui fait partie des spécifications SCAP (Security Content Automation Protocol - protocole d'automation contenu sécuritaire) du NIST (National Institute of Standards and Technology). Ce langage permet de représenter un ensemble structuré de règles de sécurité de façon à supporter l'échange d'informations relatives à la sécurité et par conséquence de généraliser les bonnes pratiques de sécurité. Dans un exemple, la confidentialité peut être conservée, selon une politique de sécurité, c'est-à-dire une règle, par le chiffrement systématique des données. Dans cet exemple simple la règle est « chiffrer de manière systématique les données ». Ce n'est pas la clé de chiffrement. Dans un autre exemple, l'intégrité peut être conservée, selon une politique de sécurité, au moyen d'une surveillance des fichiers de configuration d'une application. Dans ce cas, la règle est « surveiller les fichiers de configuration d'une application ». Dans un autre exemple encore, la disponibilité peut être gérée, selon une politique de sécurité, en réalisant une architecture redondante. La règle est alors « réaliser une architecture redondante ». De manière générale, une politique de sécurité comprend une pluralité de règles : « chiffrer de manière systématique les données ET surveiller les fichiers de configuration d'une application ET réaliser une architecture redondante. Les politiques de sécurité selon l'invention s'appliquent en général non seulement aux données mais aussi aux programmes informatiques ou applications.

Dans l'architecture selon l'invention, des deuxièmes politiques de sécurité PSB sont par ailleurs appliquées à la gestion des données et/ou à l'exécution des programmes dans le deuxième espace d'exécution B.

Selon l'invention, une propriété P de sécurité est attendue par le utilisateur pour la gestion de ses données et/ou l'exécution de programmes informatique dans le premier espace A mais aussi en partie ou en totalité dans le deuxième espace B dans lequel il n'a pas confiance ou dans lequel il a une confiance limitée. Cette propriété P est telle que le respect des premières PSA et deuxièmes politiques de sécurité PSB garantit une gestion des données ou une exécution de programmes informatiques conforme à cette propriété P. Une telle propriété peut être éventuellement décrite comme une politique de sécurité. Par exemple un fichier sensible pourra être traité sans être chiffré dans l'espace A, mais toujours selon les règles définies plus haut à l'extérieur, dans l'espace B et le reste de l'architecture en nuage.

Par ailleurs, l'architecture selon l'invention comprend une base de confiance TCB. Cette base de confiance est un sous-ensemble de l'espace d'exécution B. La base de confiance TCB comprend une partie matérielle, à savoir un sous-ensemble physique comprenant par exemple un ou plusieurs ordinateurs/serveurs/ processeurs physiques et/ou disques mémoire, zones mémoire etc. Elle comprend par ailleurs une partie logicielle incluant des données et/ou programmes. Cette partie logicielle est généralement un petit sous-ensemble de l'espace B. A noter que l'espace d'exécution A peut de même comprendre une base de confiance TCB.

La base de confiance garantit l'application des deuxièmes politiques de sécurité PSB dans la gestion des données et/ou l'exécution des programmes dans le deuxième espace d'exécution B. A cet effet, la base de confiance dispose de moyens indicateurs d'accès non autorisés. Plus particulièrement, la partie matérielle de cette base dispose de tels moyens. Elle est donc « tamper evident » en langue anglaise. Si un accès non autorisé à la base est effectué et ce, quelles qu'en soient les causes, notamment une attaque ou une dégradation de fonctionnement volontaire ou non, et si par suite, une violation potentielle ou effective des deuxièmes politiques de sécurité PSB existe, alors des témoins indicateurs de cet accès seront actionnés de sorte que cet accès sera visible à la manière de scellés. Le terme violation est entendu dans un sens large come incluant notamment toutes intrusions, dégradations, ou vols ou modifications non autorisées de données ou des programmes ou corruptions. Les témoins indicateurs témoignent d'un accès non autorisé à la base de confiance ou d'un compromission de l'intégrité de la base. Une violation due à des hypothèses non satisfaites (par exemple un algorithme cryptographique inadapté) ne conduira pas forcément à un actionnement de l'indicateur. Dans un exemple, et pour la mise en œuvre des fonctions précitées de scellé, la base de confiance comprend un module matériel de sécurité (« Hardware Security Module » en langue anglaise ou HSM). Il s'agit d'un composant matériel considéré inviolable, qui offre généralement des fonctions cryptographiques. A noter cependant qu'un module logiciel particulier tel qu'un module de sécurité logiciel peut remplir certaines ou la totalité des fonctions précitées en addition ou à la place d'un HSM. Le utilisateur pourra donc, dans le cadre de l'invention, toujours vérifier a posteriori les témoins de violation pour la partie physique, par exemple une salle machine, des matériels, etc., et inspecter l'authenticité et la conformité de la base de confiance de l'opérateur tiers B. Si les indicateurs de violation sont vierges il sera en mesure d'assurer que les comportements attendus ont été respectés et que son objectif de sécurité a bien été respecté, sans pour autant faire confiance à l'opérateur. Le utilisateur pourra se faire aider en cela - ou utiliser les services - d'un acteur tiers, auquel il est prêt à faire confiance).

Selon l'invention, la partie logicielle de la base de confiance est rendue disponible au utilisateur et/ou à un tiers de confiance. Par exemple, cette partie logicielle et, notamment, au minimum, sa partie sur support réinscriptible, et les moyens de la reconstruire, par exemple le code source, le compilateur, les générateurs, sera fournie ou rendue disponible dans son intégralité au utilisateur et/ou aux tiers qui l'assistent, à savoir des évaluateurs, des certificateurs, des consultants, etc. et auxquels le utilisateur est prêt à faire confiance, en particulier parce qu'il les aura typiquement choisi. De même sont fournis au utilisateur, les moyens, tels que le documentation, les argumentaires, les moyens de preuves, etc..., qui permettent à l'homme de l'art d'auditer a priori - certains contrôles pouvant toutefois être reportés pour être faits a posteriori - le respect des propriétés de sécurité annoncées avec un niveau de précision et de détail permettant de se convaincre que tous les chemins d'exécution de cette partie logicielle de la base de confiance garantissent le respect des deuxièmes politiques de sécurité PSB, dans des conditions de fonctionnement normales de la partie matérielle de ladite base, et sous réserve du respect des hypothèses sous-jacentes, par exemple résistance d'un algorithme cryptographique, de la qualité d'un générateur de nombre aléatoire, etc... Il devra couvrir aussi toutes les versions/configurations possibles, notamment lorsque la base de confiance de l'opérateur tiers B peut être sujette à mises à jour. Pour se convaincre notamment respect des deuxièmes politiques de sécurité PSB en présence de logiciel ayant un nombre infini de chemins d'exécution possible, on pourra, suivant les cas, faire appel à des techniques de vérification formelles, par exemple de preuves formelles, ou faire de la relecture de code ou des tests exhaustifs lorsque la faible complexité du logiciel ou de la partie du logiciel concernée le permet. On devra aussi avantageusement être en mesure de récréer et/ou valider l'ensemble des champs possibles ou un sur-ensemble de celui-ci et se convaincre que les deuxièmes politiques de sécurité sont bien respectées dans tous les cas.

En définitive, selon l'invention, si les premières politiques de sécurité PSA sont satisfaites, le fonctionnement global attendu, c'est-à-dire le fonctionnement normal, en l'absence d'attaque réussie, de cette base de confiance sera conforme aux deuxièmes politiques de sécurité PSB, et permettra donc par voie de conséquence de satisfaire P.

### Exemple de module matériel de sécurité (HSM) formant base de confiance

On peut imaginer appliquer l'invention pour réaliser des HSM de nouvelle génération qui seraient beaucoup plus souples d'utilisation et réduiraient considérablement le rôle fabricant d'HSM dans la chaine de confiance. Ils permettraient notamment :
à l'utilisateur de choisir le certificateur, et de contrôler la personnalisation,
la base de confiance logicielle d'un tel HSM est clairement identifiée et disponible pour revue,
le HSM peut être utilisé tour à tour pour plusieurs utilisateurs sous le contrôle d'un opérateur tiers qui ne serait pas de confiance,
et sont programmables avec de nouvelles fonctions de traitement.

On pourra aussi avantageusement garantir que toute la confiance que l'on porte au fabricant de HSM soit entièrement auditable : il suffira par exemple pour auditer de vérifier que le HSM fourni par le fabricant contient bien les éléments (matériels ou logiciels) attendus, sans qu'on ait besoin par exemple de faire confiance au respect d'une politique de sécurité non vérifiable (ou difficilement vérifiable). On précisera ce dernier point à l'aide d'un exemple dans la suite.

L'espace d'exécution B comprend alors cet HSM de nouvelle génération qui pourrait d'ailleurs être avantageusement implémenté à partir d'un module matériel de sécurité ProvenCore^{™} « Tamper resistant ». En effet, le boîtier ProvenCore^{™} possède une racine de confiance, un OS et des applications de sécurité auditables. La partie logicielle du boîtier formera typiquement une partie de la base de confiance logicielle pour lesquels les moyens tel que la documentation, les argumentaires, les moyens de preuve à fournir dans le cadre de l'invention existent et ont notamment pour la plupart été développés pour les besoins de l'évaluation référencée CC EAL7 du ProvenCore^{™}. La partie matérielle de ce module matériel de sécurité constituera typiquement une partie de la base de confiance matérielle.

Des exemples de boîtiers ProvenCore^{™} à vocation de filtrage sont montrés aux figures 2A et 2B. Ils comportent ici une partie matérielle référencée « Matériel » sur les figures, munies de ports Ethernet Eht1 et Eth2, et portant un cœur prouvé formellement référencé « ProvenCore^{™} » sur les figures, ledit cœur prouvé étant susceptible de mettre en œuvre voire de filtrer des piles de protocoles référencées « Piles de protocoles », le filtrage étant mis en œuvre au moyen d'un filtre du module matériel de sécurité, associé (Fig. 2A) ou non (Fig. 2B) à un VPN (Virtual Private Network - Réseau Virtuel Privé). D'autres modules matériels de sécurité ProvenCore^{™} pourront avoir d'autres vocations que le filtrage et pourront héberger d'autres applications. Ils pourront dans ce cas disposer d'autres périphériques matériels. Par exemple un module matériel de sécurité ayant un vocation de HSM pourra embarquer des applications de sécurité de stockage sécurisé, de cryptographie, etc. De tels modules matériels de sécurité peuvent aussi regrouper différentes fonctionnalités en même temps.

S'agissant de la personnalisation de l'HSM, une identité, son certificat et potentiellement quelques autres données racines sont typiquement introduites lors de la phase d'initialisation du HSM. Une manière de faire cela est d'avoir une étape de pré-personnalisation dans laquelle on insère l'identité du HSM, on insère ou on génère une paire de clé asymétriques pour le HSM, ainsi que des certificats ou clés publiques associés à chaque utilisateur et qui lui permettront plus tard de créer sa propre racine de confiance, tout cela sous le contrôle des différents utilisateurs ou de leur tiers de confiance qui seront amenés à utiliser cet HSM, sachant que cette dernière étape pourra d'ailleurs être évitée, ainsi que cela sera expliqué par la suite dans la présente description, en utilisant des clés de transport ou des mots de passe. L'étape précitée de pré-personnalisation demandera typiquement une proximité physique avec le HSM. Ensuite, chaque utilisateur pourra tour à tour personnaliser à distance le HSM pour ses propres besoins et créer ainsi sa propre racine de confiance. Ce faisant, le utilisateur sera par exemple amené à créer un canal de confiance avec le HSM en utilisant par exemple une sécurité de la couche de transport (« Transport Layer Security » en langue anglaise ou TLS) à double authentification avec des clés asymétriques préalablement distribuées. Cette personnalisation conduira typiquement à la génération d'une ou de plusieurs clés de chiffrement. Ces clés, ainsi que les clés privées dédiées au utilisateur, ne sortiront typiquement jamais en clair du HSM. Il sera par contre possible de les chiffrer sur le HSM pour les sauvegarder à l'extérieur que ce soit temporairement entre deux sessions d'un même utilisateur et les restaurer ensuite sur le même HSM ou un autre ou pour restaurer un HSM endommagé. Pour sauvegarder et restaurer ces clés sur le même HSM on utilisera typiquement une clé privée connue du seul HSM (ou d'un ensemble d'HSM constituant une famille de confiance), pour sauvegarder en vue de restaurer un HSM endommagé on utilisera par exemple pour chiffrer les sauvegarde des clés propres à chaque utilisateur, par exemple, une clé publique du utilisateur, ou plus précisément une clé symétrique générée par le HSM et chiffrée avec la clé publique de l'utilisateur pour que ce dernier soit le seul à pouvoir re-personnaliser un HSM de remplacement qui récupérera les données.

Dans l'exemple ci-dessus on a évité le besoin de donner à des tiers, a fortiori humains, la connaissance même transitoire de secrets critiques, car il est très difficile d'auditer le respect des bonnes politiques de sécurité de ces tiers. On sait auditer du logiciel ou du matériel dotés des bons moyens d'audits (documentations, etc.) mais généralement pas des processus réalisés par des acteurs tiers sauf à les surveiller en permanence. Pour réduire encore plus les besoins d'opérations nécessitant la présence physique de l'utilisateur ou de son tiers de confiance lors de l'installation ou de la préparation du HSM on pourra par exemple utiliser une fonctionnalité auditable qui permettra à l'aide d'un secret à usage unique de lancer la personnalisation à distance. Par exemple le HSM à réception de ce secret à usage unique (mot de passe, clé de transport, etc.) chiffré avec sa clé publique démarrera sa personnalisation (génération de clés, etc.), créera une entité qu'il liera à l'utilisateur, avec des mécanismes traditionnels empêchant les « men in the middle attacks » (attaques hommes au milieu). Si le secret a été compromis par l'opérateur l'utilisateur s'en rendra compte. Dans ce cas l'opérateur aura eu accès à un secret critique mais il ne pourra pas l'utiliser sans que l'utilisateur ne s'en aperçoive avant qu'il ne termine la personnalisation de son espace dans le HSM. Ce secret à usage unique n'aura plus aucune utilisé ensuite.

On voit ici que la base de confiance logicielle n'est pas forcément présente dans sa totalité à tout moment. Ici le logiciel servant à la pré-personnalisation ou à la personnalité peut disparaître quand il n'est plus utile. De la même manière certaines parties de la base de confiance ne sont pas encore chargés lors de l'initialisation. De même en cas de possibilité de mis à jour de la base de confiance logicielle les différentes versions ne sont pas généralement gardées dans le système embarqué qui les a utilisés. Mais l'audit devra pouvoir être fait sur tout le logiciel utilisé pendant la vie du produit, ce qui veut dire qu'il faut pouvoir reconstituer toutes ces versions, et parties au moment de l'audit ou des audits/évaluations. Les révisions de la base de confiance n'existeront typiquement pas au moment de l'audit/l'évaluation et devront être audité soit a priori au moment de leur installation soit a posteriori ce qui implique que l'auditeur ait une vue globale et précise des formes que peut prendre la base de confiance logicielle au cours du temps. Cela demande généralement aussi la sauvegarde de toutes ces versions utilisées.

### Exemples d'architectures informatiques en nuage selon l'invention

Pour les trois exemples suivants, la même architecture de base sera utilisée. Elle est décrite ici. Le fournisseur de services en nuage (« cloud services provider » en langue anglaise), à savoir l'opérateur tiers selon l'invention, complète son architecture existante réalisée selon l'art antérieur en ajoutant des salles spécifiques. Ces salles spécifiques réalisées selon l'invention sont des salles formant un espace d'exécution B. Elles reçoivent typiquement les mêmes serveurs et équipements que les serveurs et équipements d'une salle classique, mais comporte en outre les moyens définis pour l'architecture selon l'invention, afin de définir un espace d'exécution B sous un contrôle plus strict des utilisateurs (une société, ou une organisation utilisateur) pour certains aspects de sa sécurité.

Dans ces salles spécifiques, le fournisseur de services, à savoir l'opérateur, s'imposera typiquement certaines règles de sécurité spécifiques : par exemple il prendra en compte la notion de « domaine de sécurité ». De tels domaines de sécurité seront par essence associés dynamiquement à des utilisateurs voulant effectuer une ou des opérations sensibles (par exemple des opérations sur des données sensibles). Un domaine de sécurité sera ainsi associé à (i.e. sera la propriété d') un seul utilisateur. Le fournisseur de services s'interdira par exemple d'utiliser au même moment le même serveur pour exécuter des domaines de sécurité différents ou appartenant à des utilisateurs différents. Il s'imposera par exemple de bien supprimer les données des serveurs avant de les réaffecter à d'autres domaines de sécurité ou utilisateurs, ou en fin d'utilisation, etc.

Une salle spécifique sera aussi typiquement créée ou préparée sous le contrôle de l'utilisateur ou d'un ou plusieurs de ses tiers de confiance. Elle sera globalement inviolables (« tamper evident » en langue anglaise). En effet, une fois la salle crée sous le contrôle de l'utilisateur ou de ses tiers de confiance on scellera typiquement la salle de manière à ce qu'un accès physique ou une attaque physique réussie à la salle laisse forcément des traces que l'utilisateur ou de ses tiers de confiance pourront voir lors de ses contrôles réguliers. On peut aussi imaginer, pour plus de réactivité, un système de caméra de sécurité contrôlant les salles spécifiques et consultable en permanence par l'utilisateur, système lui-même « tamper evident » et à contrôler lors des visites régulières de contrôle.

La salle spécifique est munie de moyens conformes à l'invention. Pour cela, on utilise par exemple des modules matériels de sécurité de sécurité que le fournisseur ajoute à côté des serveurs de ses infrastructures habituelles et qui vont permettre de mettent en œuvre et/ou de contrôler les règles que se sera imposé le fournisseur de services de manière à permettre le respect des propriétés.

La figure 3B montre une salle spécifique d'une architecture informatique en nuage comprenant des serveurs S1, S2 et S3, lesdits serveurs étant disposés dans un réseau R, un module matériel de sécurité ou boitier du type présenté en figures 2A et 2B étant disposé en amont de chaque serveur S1, S2 et S3, et un boîtier additionnel BA étant disposé en entrée de la salle. La figure 3C montre une même salle dans laquelle, en addition encore, un boîtier additionnel encore BAA commande l'ensemble ou une partie des boîtiers disposés en amont des serveurs S1, S2 et S3, ainsi que le boîtier additionnel présenté en figure 3B. La figure 3A montre une salle spécifique comprenant un unique server S1 et un unique module matériel de sécurité.

Les modules matériels de sécurité ou boitiers B, BA, BAA sont des modules de préférence « tamper evident » comprenant une carte informatique à base de ProvenCore^{™} tel que décrit dans la littérature "Security Filters for IoT Domain Isolation", Dominique Bolignano, Embedded Conference, 2018 ; "Security Filters for IoT Domain Isolation", Dominique Bolignano, Florence Plateau, ISoLa, 2018. Le noyau ProvenCore^{™}, sa chaine de lancement et, plus généralement, sa chaine de confiance, certaines de ses applications entreront typiquement dans la base de confiance logicielle de l'opérateur B. Ces modules matériels de sécurité authentifient, par exemple, filtrent les commandes et données entrantes dans la salle spécifique de manière à vérifier qu'elles sont conformes aux règles que s'impose le fournisseur de cloud et, plus généralement, sont conformes aux politiques de sécurité PSB. Typiquement, elles filtrent et contrôlent tous les accès réseaux pour chaque machine de l'architecture informatique en nuage de la salle spécifique. On peut par exemple utiliser les modules matériels de sécurité décrits dans le papier sur le filtre. Elles auront potentiellement aussi d'autres fonctions comme certaines fonction d'administration des serveurs (par exemple vidage et préparation des domaines de sécurité)qui ne seraient pas faites à distance.

Le module matériel de sécurité permettant la communication avec l'extérieur devra typiquement être capable d'authentifier et ouvrir des canaux sécurisés (premier module matériel de sécurité), alors que les autres n'en auront pas nécessairement besoin (deuxième module matériel de sécurité) . On pourra bien entendu optimiser cette architecture en dupliquant certains modules matériels de sécurité pour améliorer les performances ou en réunir certains. On pourra aussi réunir plusieurs modules matériels de sécurité en un seul (en créant des modules matériels de sécurité à multiples périphériques et à de multiples fonctions). On pourra aussi utiliser un réseau dédié (en rouge) pour contrôler/administrer les modules matériels de sécurité. Les salles spécifiques que l'on vient de décrire sont typiquement des salles protégées dans des bâtiments. On peut aussi réaliser une salle spécifique en mettant un serveur et un ou plusieurs modules matériels de sécurité dans une boite « tamper evident ». Une telle salle, comportant un serveur S1 et un module matériel de sécurité BT est montrée à la figure 1. Cette salle spécifique sera alors déplaçable comme l'est un serveur. Elle pourra être préparée chez un fabricant sous le contrôle de l'utilisateur ou de son tiers de confiance, scellée puis placée dans une salle standard du fournisseur de services comme n'importe quel autre de ses serveurs.

De manière générale les modules matériels de sécurité à base de ProvenCore^{™} sont capables :
d'exécuter des applications de sécurité telles que des applications de filtrage, de mise à jour, d'authentification, de stockage sécurisé, de provisionnement de serveurs et de données contrôlées par le module matériel de sécurité, de contrôle d'interface réseau, USB, alimentation, ..., de contrôle d'intégrité des serveurs, (y compris hors base de confiance), i.e. HIDS en s'appuyant sur un TPM ou une sonde ou de VPN.
de configurer la topologie des machines, en particulier des serveur virtuels de la salle spécifique dans laquelle elles sont incluses, ou de ne laisser passer que certaines commandes ou informations dans ladite salle ou auxdites machines/serveurs. Elles peuvent en outre être utilisées pour administrer une machine en particulier un serveur et par exemple l'initialiser, la rebooter, lui charger une nouvelle configuration avant reboot, etc.). Par exemple pour exécuter un certain service sur des données critiques d'un utilisateur il faudra affecter le « serveur cloud 1 » à cet utilisateur. Le module matériel de sécurité correspondant isolera le serveur choisi et le préparera pour la session (il le videra, l'initialisera avec les bons logiciels et les bonnes données qu'il aura dû aller chercher et déchiffrer avec des clés que seuls les modules matériels de sécurité seront capables d'obtenir, etc.). Pour cela il pourra jouer le rôle de filtre (mais cela suppose que le cloud administre différemment ces serveurs, ce qui n'est généralement pas souhaitable) ou bien de proxy (le module matériel de sécurité recevra des commandes qu'il exécutera si elles sont permises en les traduisant au besoin).
potentiellement servir de module matériel de sécurité HSM,
et surtout les modules matériels de sécurité ProvenCore^{™} disposent d'une partie logicielle de la base de confiance et la manière de la reconstruire est fournie ou rendue disponible dans son intégralité à l'utilisateur et/ou à aux tiers de confiance.

Exemple d'architecture en nuage d'une entreprise avec services tels des services de tableurs, éditeurs, outils travaillant sur des données sensibles pour l'utilisateur, tels que par exemple une application de santé.

Dans ce cas, l'utilisateur est l'entreprise ou l'organisation utilisatrice.

L'espace A est un ordinateur ou le réseau interne de l'entreprise. L'utilisateur est prêt à faire confiance à l'opérateur B pour sa qualité de service mais pas pour la sécurité de ses données.

A certains moments, que ce soit parce qu'on lui laisse des possibilités régulières de vérifier ou parce qu'on lui laisse la possibilité de provoquer spontanément ces opportunités, il fait - ou fait faire - des vérifications, en particulier des vérifications des témoins de violation). En outre, s'il le souhaite, l'utilisateur contrôle la partie logicielle de la base de confiance de B, notamment si certaines vérifications n'ont pas été faites a priori, ou si un contrôle supplémentaire de la base de confiance semble utile. Une personne de confiance de l'entreprise peut le faire elle-même en s'appuyant pour certaines parties par un Centre d'Évaluation de la Sécurité des Technologies de l'Information (CESTI), ou tout autre évaluateur ou certificateur auquel il fait confiance. La personne de confiance vérifie les scellés et ou l'état du site, vérifie par exemple qu'il a bien toutes les versions et applications de la base de confiance, contrôle ou fait évaluer/auditer certaines applications de sécurité qui ne l'auraient pas été, peut faire certaine vérifications des opérations d'administrations qui auraient été réalisées par le site B et qui font aussi parti de la base de confiance, par exemple demande quelle version est utilisée ou qu'elles ont été les applications chargées.

Mais les principaux contrôles seront typiquement faits au départ :
vérification de l'étanchéité physique de l'espace, vérification de la présence des bons témoins/indicateurs de violation.
vérification que la combinaison des deux politiques de sécurité PSA et PSB assorti potentiellement d'hypothèses sous-jacentes (qui paraissent acceptables pour l'utilisateur) permet bien de respecter objectif de sécurité choisi,
identification précise d'un sous-ensemble du logiciel de B (et ses éventuelles évolutions) qui est conservé entièrement qui peut être utilisé si les témoins de B sont non violés, pour une vérification a posteriori permettant de se convaincre que l'objectif de sécurité a bien été réservé (sous réserve de la satisfaction de PSA) : par exemple vérification de toutes les versions de la TCB utilisées, vérification qu'elles avaient été correctement évalués par l'utilisateur ou son évaluateur de confiance, réévaluation au besoin de certaines parties. La base de confiance sera pour une grande partie le logiciel des modules matériels de sécurité (ProvenCore, ses applications, etc.),
vérification que l'architecture permet la conservation des versions de la base de confiance (différentes versions de ProvenCore de ses applications, etc.),
vérification que la qualité des argumentaires permettent d'atteindre le niveau de confiance voulu,
on aura typiquement appairé à ce moment les salles serveurs avec les différents utilisateurs. On peut ensuite charger ou configurer soi-même un HSM qui va nous être associé, ou on pourra utiliser les HSM de nouvelles générations décrits dans le premier cas d'utilisation décrit.

Les données de l'utilisateur peuvent être stockées dans l'espace en nuage standard (les données sensibles sont chiffrées par des clés et les données sensibles comme les clés ne circulent jamais en clair dans l'espace en nuage normal).

Quand un utilisateur a besoin d'exécuter un service dans l'architecture en nuage nécessitant la mise en œuvre d'une sécurité, par exemple édition ou traitement d'un document confidentiel, le fichier chiffré qui est typiquement dans l'architecture standard est rapatrié dans une salle spécifique selon l'invention, respectant les bonnes contraintes. D'autres fichiers nécessaires au traitement peuvent être aussi rapatriés (par exemple base de données). Un nouveau domaine de sécurité est typiquement créé, ce qui implique généralement qu'un module matériel de sécurité et un serveur sont momentanément affectés à la tâche. Le module matériel de sécurité crée une zone fermée, i.e. un domaine de sécurité, charge (ou contrôle le chargement) les bons logiciels d'éditions ou de traitement, crée les barrières de protections avec l'extérieur (selon les cas isole le domaine ou lui laisse accéder à certaines informations extérieures), crée un canal de communication sécurisé avec l'utilisateur pour permettre l'interaction avec lui, et permettre ou pas certains échanges de données, etc., initialise correctement l'ensemble, et effectue toutes les opérations d'administrations associées. En particulier certaines versions de logiciel de traitement ou de l'OS sous-jacent (par exemple Linux) pourront être demandées explicitement par l'utilisateur, mais ne feront typiquement pas partie de la base de confiance. En effet des bugs potentiels dans cette partie du logiciels peuvent certes exister, mais si le domaine de sécurité dans lequel vont tourner cette pile logicielle est correctement isolé, elles ne pourront pas être facilement exploitées par un attaquant, et l'utilisateur s'en accommodera typiquement et n'aura pas besoin de lui appliquer les mêmes contraintes, car typiquement les propriétés de sécurité qu'il souhaite (par exemple confidentialité) seront garanties par l'architecture de sécurité, même en présence de bug. Il se retrouvera dans la situation dans laquelle il aurait été en exécutant la fonction chez lui (sans faire appel au cloud) sur une machine correctement configurée et protégée.

Exemple d'architecture dans laquelle l'utilisateur demande des services tels que des services de tableur ou d'éditeur, l'utilisateur étant un simple utilisateur personne physique.

L'espace A est l'ordinateur de l'utilisateur. A est prêt à faire confiance à B pour sa qualité de service mais pas pour la sécurité de ses données.

L'utilisateur pourra choisir qu'un CESTI, un certificateur, ou une personne de confiance auquel il fait confiance a bien vérifié la ou les salles spécifiques qu'il va utiliser, ce qui veut dire que le fournisseur de service cloud aura fait appel à un nombre et une variété suffisante d'organismes tiers de confiance pour que les utilisateurs de la cible marketing visée puisse y trouver un tiers acceptable.

### Exemple dans laquelle l'architecture est une réseau de téléphonie du type 3G, 4G ou 5G

L'utilisateur est par exemple l'opérateur télécom. Mais le matériel utilisé (par exemple infrastructures, base stations, etc.) sont des objets très complexes qui vont constituer l'espace (B) qui sont sous le contrôle de l'opérateur, mais aussi d'une certaine manière du fournisseur, car ce dernier aurait pu s'autoriser l'accès autorisé ou pas au matériel (mises à jours, envoi d'opérations, etc.). L'opérateur est ici l'utilisateur selon l'invention alors que le fournisseur d'infrastructure sera l'opérateur selon l'invention car ce dernier peut potentiellement modifier, opérer, écouter, ou contrôler par des canaux cachés. Un attaquant autre que le fournisseur de service pourrait aussi jouer le rôle d'opérateur selon l'invention. Le monde extérieur (le fournisseur du matériel ainsi que tous les autres acteurs) peut aussi jouer ce rôle selon l'invention. L'invention permettra d'apporter de la confiance à l'utilisateur (l'opérateur de réseau ici).

### Exemple chip embarqué avec domaine de sécurité

Environnement d'exécution (A) : Un système ou sous système bien maitrisé auquel on a confiance pour faire un certain traitement (typiquement un traitement sensible i.e. confidentialité ou sureté).

Environnement d'exécution (B) : Calculateur embarqué connecté moins maîtrisé qui peut potentiellement être attaqué (typiquement par l'opérateur selon l'invention) et qui va réaliser certains traitements critiques pour le système (A),

Opérateur B : les acteurs de la chaine de valeur qui collectivement développent ce calculateur embarqué (fabricant de chip, équipementier, fabricant du dispositif etc.) ou un attaquant exploitant une faille laissée par l'un d'eux.

Solution : Le (un) processeur du calculateur (B) a au moins un espace de sécurité. Par exemple sur des chips à base d'architecture ARM^{™} Cortex A cet espace pourra être celui de la TrustZone^{™}, mais contrairement à ce qui est fait habituellement, l'OS de sécurité, i.e. le TEE, la chaine de boot (le boot Secure, une partie du boot loader), le code moniteur feront partie de la TCB logicielle au sens de l'invention et devront être traitées comme telles selon l'invention. Cela impliquera notamment une identification précise de la TCB logicielle, et un traitement particulier de celle-ci. Le fabricant du chip devra notamment donner l'ensemble de la TCB logicielle ou suffisamment d'information pour qu'elle soit correctement auditable par divers tiers.

Mais surtout il faut aussi inclure dans la TCB les logiciels utilisés dans la phase amont de personnalisation et de boot (même s'ils disparaissent pour des raisons de manque de place). Il faut aussi inclure les différentes versions quand la base de confiance peut être mise à jour. Pour les phases amont on peut imaginer (1) on fait confiance au matériel (qui doit avoir une certaine forme de « tamper evidence ») et on a une ROM minimale (et documentée et qui peut potentiellement être scannée en mode privilégié (2) ou on utilise un chip « removable » et muni d'un module matériel de sécurité « tamper évident » que l'on met quand on reçoit l'objet, le téléphone ou l'ECU autombile par exemple (le chip « removable » sera mis à la manière d'une SIM à la manière d'une SIM). Donc téléphone ou calculateur « tamper évident » ou pas, on aura slot pour mettre chip removable et contenant tout ou partie de la TCB.

Les chips à base d'architecture ARM^{™} Cortex A ne sont qu'un exemple. Dans certaines nouvelles générations de chips qu'ils soient à base d'ARM ou pas on peut créer plusieurs espaces de sécurité (l'iMX8^{™} de NXP^{™}, ou certaines architectures multi ou « many » cœurs, telle celle du nouveau processeur européen développé dans le cadre de EPI, i.e. European Processor Initiative). Ces espaces de sécurité sont généralement obtenus par programmation du contrôleur mémoire. Les logiciels qui feront configurations et/ou ces contrôles feront typiquement aussi partie de la base de confiance logicielle de (B) dans le cadre de l'invention.

### Exemple remontée d'information critiques et /ou deep learning dans cloud

L'utilisation du cloud pour la remontée et le traitement de données sensibles (par exemple pour le deep learning) est souvent considéré comme problématique notamment pour le respect de la vie privée. On peut combiner les deux aspects décrits dans les exemples « chip distant avec domaine de sécurité » et « architecture en nuage et leur salles spécifiques ». L'espace de sécurité embarqué (B)(par un exemple dans un calculateur ADAS pour la conduite autonome dans l'automobile qui a accès à de nombreuses données sensibles pour le conducteur) communique de manière sécurisé avec un domaine de sécurité dans une salle spécifique du cloud (une autre partie de (B). L'espace d'exécution (A) sera par exemple l'ensemble des calculateurs mieux maitrisés de la voiture qui fournissent les données sensibles au calculateur ADAS (position véhicule, données caméras, etc.). L'utilisateur sera typiquement l'ensemble conducteur/fabricant.

Exemple : utilisation de la puissance inutilisée dans l'embarqué (par exemple processeur d'une voiture lorsqu'elle est garée).

On utilise un espace de sécurité sur le processeur inutilisé embarqué pour réaliser des traitements pour le compte du cloud (ou des ordinateurs de l'utilisateur). Le cloud ou les ordinateurs de l'utilisateur forment ici l'espace (A) qui va par exemple utiliser cette puissance inutilisée de (B) pour du minage de crypto monnaie ou tout autre traitement intensif, et le processeur (ou le calculateur) inutilisé est (B), par exemple le processeur « many » cœurs principal d'une voiture de nouvelle génération. Le propriétaire de la voiture loue cette puissance inutilisée au mineur (i.e. l'utilisateur) qui sans avoir le contrôle de ce processeur embarqué est assuré du respect de certaines propriétés de sécurité.

## Revendications

1. Architecture informatique en nuage sécurisée comprenant :
un premier espace (A) de gestion de données et/ou d'exécution de programmes informatiques dans lequel la gestion des données et/ou l'exécution des programmes est contrôlée par un utilisateur ; et
un deuxième espace (B) de gestion de données et/ou d'exécution de programmes informatiques dans lequel la gestion des données ou l'exécution des programmes est contrôlée par un opérateur tiers,
**caractérisée en ce qu'**elle comprend en outre :
des premières politiques de sécurités (PSA) appliquées aux données ou à l'exécution des programmes dans le premier espace d'exécution (A) ;
des deuxièmes politiques de sécurité (PSB) appliquées aux données ou à l'exécution des programmes dans le deuxième espace d'exécution (B) ;
une propriété (P) de sécurité attendue par l'utilisateur,
le respect desdites premières et deuxièmes politiques de sécurité garantissant une gestion des données et/ou une exécution de programmes informatiques conforme à cette propriété (P) ; et
une base de confiance (TCB) garantissant, en l'absence de violation, l'application des deuxièmes politiques de sécurité (PSB) dans la gestion des données et/ou l'exécution des programmes dans le deuxième espace d'exécution (B),
ladite base de confiance comprenant, d'une part, une partie matérielle disposant de témoins indicateurs d'accès non autorisés et, d'autre part, une partie logicielle, ladite partie logicielle étant rendue disponible à l'utilisateur et/ou à un tiers de confiance et dans laquelle les témoins indicateurs d'accès non autorisés sont visibles à l'utilisateur.

2. Architecture selon la revendication 1, **caractérisée en ce que** la base de confiance comprend un module matériel de sécurité, ledit module matériel de sécurité permettant à l'utilisateur de choisir un certificateur pour le représenter, et dans laquelle la partie logicielle de la base de confiance est rendue disponible à l'utilisateur ou à son représentant.

3. Architecture selon l'une des revendications précédentes, **caractérisée en ce que** la partie logicielle de la base de confiance et la manière de la reconstruire est fournie ou rendue disponible à l'utilisateur et/ou au tiers de confiance.

4. Architecture selon l'une des revendications précédentes, **caractérisée en ce que** la base de confiance est partie d'un module matériel de sécurité dont le cœur logiciel est formellement prouvé.

5. Architecture selon l'une des revendications précédentes, **caractérisée en ce que** sont fournis à l'utilisateur les moyens qui lui permettent d'être convaincu que tous les chemins d'exécution de la partie logicielle de la base de confiance garantissent le respect des deuxièmes politiques de sécurité, dans des conditions de fonctionnement normales.

6. Architecture selon l'une des revendications précédentes, **caractérisée en ce qu'**elle comporte infrastructure comprenant un sous-ensemble qui comporte un ou plusieurs serveurs physiques formant l'espace (B), une partie matérielle et/ou de la base logicielle de la base de confiance formant un boitier(s) (BT) étant associée auxdits serveurs.

7. Architecture selon la revendication 6, **caractérisée en ce qu'**elle comporte en outre une partie matérielle de la base de confiance formant un module de sécurité additionnel (BTA), ce module de sécurité additionnel étant disposé à l'entrée du sous-ensemble et disposant de moyens pour filtrer des paquets de données entrant dans le sous-ensemble, cette filtration comportant une vérification que lesdits paquets de données satisfont à une politique de sécurité.

8. Architecture selon l'une des revendications précédentes, **caractérisée en ce que** la partie matérielle de la base de confiance, est fournie ou rendue disponible à l'utilisateur et/ou au tiers de confiance.

9. Procédé de sécurisation d'une architecture informatique en nuage comprenant les étapes selon lesquelles :
un premier espace (A) de gestion de données et/ou d'exécution de programmes informatiques est fourni, dans lequel la gestion des données et/ou l'exécution des programmes est contrôlée par un utilisateur ;
un deuxième espace (B) d'exécution de programmes informatiques est fourni, dans lequel la gestion des données et/ou
l'exécution des programmes est contrôlée par un opérateur tiers ;
des premières politiques de sécurités (PSA) sont appliquées aux données et/ou à l'exécution des programmes dans le premier espace d'exécution (A) ;
des deuxièmes politiques de sécurité (PSB) sont appliquées aux données et/ou à l'exécution des programmes dans le deuxième espace d'exécution (B) ;
une propriété (P) de sécurité attendue par l'utilisateur est définie, le respect desdites premières (PSA) et deuxièmes (PSB) politiques de sécurité garantissant une gestion et données et/ou une exécution de programmes informatiques conforme à cette propriété (P) ;
une base de confiance (TCB) est fournie, garantissant l'application des deuxièmes politiques de sécurité (PSB) dans la gestion des données et/ou l'exécution des programmes dans le deuxième espace d'exécution (B), ladite base de confiance comprenant, d'une part, une partie matérielle disposant de moyens indicateurs d'accès non autorisés et, d'autre part, une partie logicielle, ladite partie logicielle étant rendue disponible à l'utilisateur et/ou à un tiers de confiance ; et en ce que
la gestion des données et/ou l'exécution des programmes effectuée par l'utilisateur au moins en partie dans le deuxième espace d'exécution (B) est considérée comme satisfaisante à la propriété (P) attendue par l'utilisateur, si les témoins indicateurs d'accès restent vierges,
les témoins indicateurs d'accès non autorisés étant visibles à l'utilisateur.

10. Procédé selon la revendication 9, **caractérisé en ce que** la partie logicielle de la base de confiance et la manière de la reconstruire est fournie ou rendue disponible dans son intégralité à l'utilisateur et/ou au tiers de confiance.

## Patentansprüche

1. Sichere Cloud-Computing-Architektur, umfassend:
einen ersten Datenverwaltungs- und/oder Computerprogrammausführungsbereich (A), in dem die Datenverwaltung und/oder die Programmausführung von einem Benutzer gesteuert wird; und
einen zweiten Datenverwaltungs- und/oder Computerprogrammausführungsbereich (A), in dem die Datenverwaltung und/oder die Programmausführung von einem Drittbetreiber gesteuert wird,
**dadurch gekennzeichnet, dass** sie weiter Folgendes umfasst:
erste Sicherheitsrichtlinien (PSA), die auf Daten oder die Ausführung von Programmen in dem ersten Ausführungsbereich (A) angewendet werden;
zweite Sicherheitsrichtlinien (PSB), die auf Daten oder die Ausführung von Programmen in dem zweiten Ausführungsbereich (B) angewendet werden;
eine von dem Benutzer erwartete Sicherheitseigenschaft (P), die Einhaltung dieser ersten und zweiten Sicherheitsrichtlinien, die eine Datenverwaltung und/oder Ausführung von Computerprogrammen in Übereinstimmung mit dieser Eigenschaft (P) gewährleisten; und
eine Vertrauensbasis (TCB), die bei Nichtverletzung die Anwendung der zweiten Sicherheitsrichtlinien (PSB) in der Datenverwaltung und/oder Ausführung der Programme in dem zweiten Ausführungsbereich (B) gewährleistet, wobei die Vertrauensbasis einerseits einen Hardwareteil mit Anzeigen für nicht autorisierten Zugriff und andererseits einen Softwareteil umfasst, wobei der Softwareteil dem Benutzer und/oder einem vertrauenswürdigen Dritten zur Verfügung gestellt wird und in dem die Anzeigen für nicht autorisierten Zugriff für den Benutzer sichtbar sind.

2. Architektur nach Anspruch 1, **dadurch gekennzeichnet, dass** die Vertrauensbasis ein Sicherheits-Hardwaremodul umfasst, wobei das Sicherheits-Hardwaremodul es dem Benutzer ermöglicht, einen Zertifizierungsanbieter zur Vertretung auszuwählen, und wobei der Softwareteil der Vertrauensbasis dem Benutzer oder seinem Vertreter zur Verfügung gestellt wird.

3. Architektur nach einem der vorhergehenden Ansprüche, **dadurch gekennzeichnet, dass** der Softwareteil der Vertrauensbasis und die Art und Weise, wie er rekonstruiert wird, dem Benutzer und/oder dem vertrauenswürdigen Dritten bereitgestellt oder zur Verfügung gestellt wird.

4. Architektur nach einem der vorhergehenden Ansprüche, **dadurch gekennzeichnet, dass** die Vertrauensbasis Teil eines Hardware-Sicherheitsmoduls ist, dessen Softwarekern formell nachgewiesen ist.

5. Architektur nach einem der vorhergehenden Ansprüche, **dadurch gekennzeichnet, dass** dem Benutzer die Mittel zur Verfügung gestellt werden, die es ihm ermöglichen, davon überzeugt zu sein, dass alle Ausführungswege des Softwareteils der Vertrauensbasis die Einhaltung der zweiten Sicherheitsrichtlinien unter normalen Betriebsbedingungen gewährleisten.

6. Architektur nach einem der vorhergehenden Ansprüche, **dadurch gekennzeichnet, dass** sie eine Infrastruktur aufweist, die eine Untergruppe umfasst, die einen oder mehrere physische Server aufweist, die den Bereich (B) bilden, wobei ein Hardwareteil und/oder die Softwarebasis der Vertrauensbasis, die ein Gehäuse (BT) bilden, mit den Servern verbunden ist.

7. Architektur nach Anspruch 6, **dadurch gekennzeichnet, dass** sie weiter einen Hardwareteil der Vertrauensbasis aufweist, der ein zusätzliches Sicherheitsmodul (BTA) bildet, wobei dieses zusätzliche Sicherheitsmodul an dem Eingang der Unterbaugruppe angeordnet ist und Mittel zum Filtern von Datenpaketen aufweist, die in die Unterbaugruppe eingehen, wobei diese Filterung eine Überprüfung aufweist, dass die Datenpakete einer Sicherheitsrichtlinie entsprechen.

8. Architektur nach einem der vorhergehenden Ansprüche, **dadurch gekennzeichnet, dass** der Hardwareteil der Vertrauensbasis dem Benutzer und/oder dem vertrauenswürdigen Dritten bereitgestellt oder zur Verfügung gestellt wird.

9. Verfahren zur Sicherung einer Cloud-Computing-Architektur, das die Schritte umfasst, nach denen:
ein erster Datenverwaltungs- und/oder Computerprogrammausführungsbereich (A) bereitgestellt wird, in dem die Datenverwaltung und/oder Programmausführung von einem Benutzer gesteuert wird;
ein zweiter Datenverwaltungs- und/oder Computerprogrammausführungsbereich (B) bereitgestellt wird, in dem die Datenverwaltung und/oder die Programmausführung von einem Drittbetreiber gesteuert wird;
erste Sicherheitsrichtlinien (PSA) auf Daten und/oder die Ausführung von Programmen in dem ersten Ausführungsbereich (A) angewendet werden;
zweite Sicherheitsrichtlinien (PSB) auf Daten und/oder die Ausführung von Programmen in dem zweiten Ausführungsbereich (B) angewendet werden;
eine von dem Benutzer erwartete Sicherheitseigenschaft (P) definiert wird, wobei die Einhaltung der ersten (PSA) und zweiten (PSB) Sicherheitsrichtlinien die Verwaltung und Daten und/oder die Ausführung von Computerprogrammen in Übereinstimmung mit dieser Eigenschaft (P) gewährleistet; eine Vertrauensbasis (TCB) bereitgestellt wird, die die Anwendung der zweiten Sicherheitsrichtlinien (PSB) in der Datenverwaltung und/oder der Ausführung der Programme in dem zweiten Ausführungsbereich (B) gewährleistet, wobei die Vertrauensbasis einerseits einen Hardwareteil mit Mitteln für nicht autorisierten Zugriff und andererseits einen Softwareteil umfasst, wobei der Softwareteil dem Benutzer und/oder einem vertrauenswürdigen Dritten zur Verfügung gestellt wird; und dadurch, dass
die Datenverwaltung und/oder die Ausführung der Programme, die von dem Benutzer mindestens teilweise in dem zweiten Ausführungsbereich (B) durchgeführt wird, als mit der von dem Benutzer erwarteten Eigenschaft (P) zufriedenstellend gilt, wenn die Zugriffsanzeigen leer bleiben,
wobei die Anzeigen für nicht autorisierten Zugriff für den Benutzer sichtbar sind.

10. Verfahren nach Anspruch 9, **dadurch gekennzeichnet, dass** der Softwareteil der Vertrauensbasis und die Art und Weise, wie er rekonstruiert wird, dem Benutzer und/oder dem vertrauenswürdigen Dritten in seiner Gesamtheit bereitgestellt oder zur Verfügung gestellt wird.

## Claims

1. Secure cloud computing architecture comprising:
a first data management and/or computer program execution space (A) wherein the data management and/or program execution is controlled by a user; and
a second data management and/or computer program execution space (B) wherein the data management or program execution is controlled by a third-party operator,
**characterised in that** it further comprises:
first security policies (PSA) applied to the data or to the program execution in the first execution space (A);
second security policies (PSB) applied to the data or to the program execution in the second execution space (B);
a security property (P) expected by the user, compliance with said first and second security policies guaranteeing data management and/or execution of computer programs in accordance with that property (P); and
a trusted base (TCB) ensuring, in the absence of a breach, the application of the second security policies (PSB) in the management of the data and/or the execution of the programs in the second execution space (B), said trusted base comprising, on the one hand, a hardware part having cookies indicating unauthorised access and, on the other hand, a software part, said software part being made available to the user and/or to a trusted third party and wherein the cookies indicating unauthorised access are visible to the user.

2. Architecture according to claim 1, **characterised in that** the trusted base comprises a security hardware module, said security hardware module allowing the user to select a certifier to represent it, and wherein the software part of the trusted base is made available to the user or their representative.

3. Architecture according to one of the preceding claims, **characterised in that** the software part of the trusted base and the manner of reconstructing it is provided or made available to the user and/or to the trusted third party.

4. Architecture according to one of the preceding claims, **characterised in that** the trusted base is part of a security hardware module the software core of which is formally proven.

5. Architecture according to one of the preceding claims, **characterised in that** the means are provided to the user that allow him to be convinced that all execution paths of the software part of the trusted base guarantee compliance with the second security policies, under normal operating conditions.

6. Architecture according to one of the preceding claims, **characterised in that** it includes an infrastructure comprising a subset which comprises one or more physical servers forming the space (B), a hardware part and/or the software base of the trusted base forming a unit(s) (BT) being associated with said servers.

7. Architecture according to claim 6, **characterised in that** it further includes a hardware part of the trusted base forming an additional security module (BTA), this additional security module being arranged at the input of the subset and having means for filtering data packets entering the subset, this filtering including verification that said data packets meet a security policy.

8. Architecture according to one of the preceding claims, **characterised in that** the hardware part of the trusted base is provided or made available to the user and/or to the trusted third party.

9. Method for protecting a cloud computing architecture comprising the steps according to which:
a first data management and/or computer program execution space (A) is provided, wherein the data management and/or program execution is controlled by a user;
a second computer program execution space (B) is provided, wherein the data management and/or program execution is controlled by a third-party operator;
first security policies (PSA) are applied to the data and/or to the program execution in the first execution space (A);
second security policies (PSB) are applied to the data and/or to the program execution in the second execution space (B);
a security property (P) expected by the user is defined, compliance with said first (PSA) and second (PSB) security policies guaranteeing management and data and/or execution of computer programs compliant with this property (P);
a trusted base (TCB) is provided, ensuring the application of the second security policies (PSB) in the data management and/or the execution of the programs in the second execution space (B), said trusted base comprising, on the one hand, , a hardware part having unauthorised access indicator means and, on the other hand, a software part, said software part being made available to the user and/or a trusted third party; and in that
the data management and/or program execution performed by the user at least partially in the second execution space (B) is considered to be satisfactory to the property (P) expected by the user, if the access-indicating cookies remain blank,
the cookies indicating unauthorised access being visible to the user.

10. Method according to claim 9, **characterised in that** the software part of the trusted base and the manner of reconstructing it is provided or made available in its entirety to the user and/or to the trusted third party.
